(19) Europäisches Patentamt European Patent Office Office européen des brevets

(11) **EP 3 685 573 B1**

(12) **FASCICULE DE BREVET EUROPEEN**

(45) Date de publication et mention
de la délivrance du brevet:
**21.04.2021 Bulletin 2021/16**

(21) Numéro de dépôt: **18773182.3**

(22) Date de dépôt: **21.09.2018**

(51) Int Cl.:
*H04N 5/225* (2006.01)          *H04N 9/04* (2006.01)
*H04N 5/33* (2006.01)          *H04N 5/232* (2006.01)

(86) Numéro de dépôt international:
**PCT/EP2018/075628**

(87) Numéro de publication internationale:
**WO 2019/057907 (28.03.2019 Gazette 2019/13)**

(54) **CAPTEUR D'IMAGE À MATRICE DE BAYER**

BAYER-MATRIX-BILDSENSOR

BAYER MATRIX IMAGE SENSOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.09.2017 FR 1700966**

(43) Date de publication de la demande:
**29.07.2020 Bulletin 2020/31**

(73) Titulaire: **Safran Electronics & Defense
92100 Boulogne-Billancourt (FR)**

(72) Inventeurs:
• **DAVENEL, Arnaud
92100 Boulogne-Billancourt (FR)**
• **JOUFFROY, Michel
92100 Boulogne-Billancourt (FR)**
• **DUBOIS, Corentin
92100 Boulogne-Billancourt (FR)**
• **GUERIN, Yannick
92100 Boulogne-Billancourt (FR)**
• **ROBERT-CHARRERAU, Eric
92100 Boulogne-Billancourt (FR)**

(74) Mandataire: **Regimbeau
20, rue de Chazelles
75847 Paris Cedex 17 (FR)**

(56) Documents cités:
**US-A1- 2007 252 908     US-A1- 2010 200 730**

**Description**

**DOMAINE DE L'INVENTION**

La présente invention concerne un capteur d'image comprenant une matrice de Bayer.

**ETAT DE LA TECHNIQUE**

Il est connu de l'état de la technique un capteur d'image comprenant une matrice de Bayer et un photodétecteur agencé en aval de la matrice de Bayer.

De façon connue, une matrice de Bayer comprend une pluralité de filtres optiques disposées en damier et sensibles à différentes longueurs d'ondes. Ainsi, une matrice de Bayer comprend conventionnellement au moins les neuf filtres optiques suivants :

- un filtre optique de référence, configuré pour éliminer ou atténuer dans un signal optique reçu une première bande de longueurs d'onde comprenant une première longueur d'onde $\lambda_1$, mais pour laisser passer une deuxième bande de longueurs d'onde comprenant une deuxième longueur d'onde $\lambda_2$,
- huit filtres optiques adjacents au filtre optique de référence, dont quatre sont configurés pour laisser passer dans le signal optique reçu la première bande de longueurs d'onde, et pour éliminer ou atténuer la deuxième bande de longueurs d'onde.

Le photodétecteur agencé en aval de la matrice de Bayer permet de reconstruire une image, chaque pixel de l'image correspondant à l'un des filtres optiques de la matrice de Bayer. Ainsi, un pixel de référence de l'image est spécifiquement associé au filtre de référence susmentionné.

L'image reconstruite est porteuse d'informations dans les deux bandes spectrales à laquelle la matrice de Bayer est sensible.

En particulier, le pixel de référence de l'image est affublé d'une couleur élaborée à partir d'une première information relative à la première bande de longueurs d'onde, et d'une deuxième information relative à la deuxième bande de longueurs d'onde.

La deuxième information est fournie directement par le photodétecteur, puisque le filtre optique de référence laisse passer cette deuxième bande.

Cependant, la première information ne peut pas être obtenue de la même manière, puisque le filtre optique de référence élimine ou tout du moins atténue cette première bande. Aussi, cette première information est obtenue indirectement en combinant les informations relatives à la première bande de longueurs d'onde en des pixels adjacents au pixel de référence, ces pixels adjacents étant associés à des filtres optiques adjacents laissant passer la première bande de longueurs d'onde.

Dans la littérature, l'étape consistant à reconstruire, pour chaque pixel à partir des informations disponibles en ledit pixel ou en son voisinage les données de chacune des bandes de longueur d'onde, est conventionnellement nommée « dématriçage » (ou « débayerisation » par néologisme). Quand les bandes de longueur d'onde sont proches, par exemple dans une application visible dans laquelle est utilisée une matrice de Bayer ayant des filtres rouge-vert-bleu (RVB), des algorithmes de dématriçage connus mettent en œuvre une analyse d'un gradient local et négligent la dispersion de la réponse impulsionnelle optique suscitée par la matrice de Bayer (également appelée « fonction d'étalement », et en anglais « Optical Point Spread Function », abrégé en OPSF).

Deux raisons principales permettent d'expliquer les raisons de cette approche. La théorie démontre que la réponse impulsionnelle optique optimale (i.e. limitée par la diffraction) est une tache d'Airy dont le premier anneau sombre a un diamètre égal à 2.44*lambda*N, où lambda est longueur d'onde considérée et N est nombre d'ouverture du système (N=focale/diamètre de la pupille d'entrée).

Dans le cas d'une matrice de Bayer dans le domaine visible, les longueurs d'onde moyennes des bandes spectrales RBV sont relativement peu éloignées, et, par ailleurs, les OPSF (liées aux qualités optiques des filtres optiques formant la matrice de Bayer) sont éloignées de la limite de la diffraction. Ceci conduit à des OPSF associées aux bandes spectrales RVB suffisamment similaires pour négliger leurs différences.

Toutefois, dans d'autres applications, les OPSF aux différentes bandes de longueurs d'onde auxquelles la matrice de Bayer est sensible peuvent être notablement différentes ; dans un premier exemple, quand les bandes de longueur sont éloignées l'une de l'autre ; dans un deuxième exemple, quand les qualités optiques des filtres optiques constituant la matrice de Bayer sont telles que la similarité des OPSF n'est plus une approximation réaliste. Le dématriçage mis en œuvre pour des matrices de Bayer opérant dans le domaine visible, et négligeant les différences d'OPSF ne peut donc plus être utilisé pour reconstruire une image.

Ces difficultés sont rencontrées tout particulièrement lorsqu'on a $\lambda_1/\lambda_2 = 1/2$, où $\lambda_1$ est compris dans la première

bande et $\lambda_2$ est compris dans la deuxième bande. Un tel rapport peut survenir notamment lorsque la première bande est choisie dans la bande infrarouge « SWIR » (« Short-wavelength infrared ») et la deuxième bande choisie dans la bande infrarouge « MWIR » (« Mid-wavelength infrared »).

Dans une telle configuration, les qualités optiques à l'état de l'art similaires conduisent à des OPSF similaires (par exemple proche de la diffraction) vis-à-vis de la bande de longueur d'onde pour chaque bande de longueur d'onde considérée, et donc à un ratio de 2 entre les dimensions radiales des OPSF. D'un point de vue de la répartition spatiale énergétique, cela signifie que pour une même énergie ponctuelle à l'infini la surface éclairée au niveau de la matrice de photodétecteurs est environ quatre fois plus petite dans la première bande que dans la deuxième bande.

Une première façon de contourner le problème consisterait à ajuster le nombre d'ouverture N à la première bande de longueur d'onde en l'augmentant, par exemple d'un facteur 2 par rapport au $N_{initial}$ qui aurait été choisi pour la configuration optimale pour la deuxième bande de longueurs d'onde. Toutefois, cela aurait pour conséquence d'étaler d'un facteur 2 la dimension radiale des OPSF sans les rendre similaires (au sens de la diffraction) d'une bande de longueur d'onde à l'autre, de diminuer d'un facteur 4 la densité d'énergie déposée par unité de surface au niveau du photodétecteur et d'augmenter d'un facteur 4 la durée d'exposition par rapport à la configuration avec le $N_{initial}$.

Une seconde façon serait de concevoir un système optique présentant un nombre d'ouverture $N_1$ pour la première bande de longueur d'onde et un nombre d'ouverture $N_2$ pour la seconde bande de longueur d'onde, tel que $N_1 = N_2/2$. Les OPSF des deux bandes de longueur seraient ainsi similaires (au sens de la diffraction) mais la durée d'exposition requise de la première longueur d'onde augmenterait d'un facteur 4 par rapport à la configuration $N_1 = N_2$.

Une troisième façon consisterait à introduire volontairement des aberrations optiques dans la conception du système optique, de manière privilégiée pour les rayons de la première bande spectrale, afin de rendre similaire les OPSF des deux bandes de longueur d'onde. L'inconvénient de cette solution est qu'elle conduit à des OPSF qui ne sont pas spatialement co-localisées dans le champ d'imagerie.

Le document US 2010/200730 A1 divulgue le préambule des revendications 1 et 15. Ce document divulgue une appareil d'imagerie comprenant un capteur d'image muni d'une matrice de Bayer, un module de lentille et un masque de phase agencé entre le module de lentille et le capteur d'images permettant de supprimer la diaphonie ('crosstalk') qui se produit lorsque la lumière incidente est défocalisée dans un dispositif d'imagerie.

Le document US2007252908 A divulgue l'arrangement d'un dispositif d'imagerie comprenant au moins trois appareils de capture d'images. Chaque appareil comprenant un système optique et un capteur et étant configuré pour produire une image, le dispositif comprenant en outre un processeur configuré pour combiner au moins une partie des images entre elles afin de produire une image en couleur. Chaque système optique comprend un filtre de couleur, une ouverture, une lentille et un masque de phase qui modifie la phase des rayons lumineux entrants de telle sorte que la distribution des rayons après le système de lentilles est insensible à l'emplacement du capteur.

## EXPOSE DE L'INVENTION

Un but de l'invention est de permettre la reconstruction d'une image multi-spectrale par un capteur d'image utilisant une matrice de Bayer sensible à deux bandes de longueurs d'onde et générant une dispersion de réponse impulsionnelle optique non négligeable.

Un autre but de la présente invention est de proposer un capteur d'image rendant similaires les images reconstruites dans deux telles bandes de longueur d'onde afin que l'unité de traitement d'image puisse évaluer les intensités reçues dans chaque bande spectrale par chaque élément du plan image.

Encore un autre but de la présente invention est de moduler le compromis entre le nombre d'ouverture, la durée d'exposition et la dimension du photodétecteur utilisé dans un capteur d'image utilisant une matrice de Bayer.

Un premier aspect de l'invention concerne un capteur d'image selon la revendication 1, un tel capteur d'image comprenant:

- un système optique pour recevoir un signal optique, le système optique comprenant une pupille,
- une matrice de Bayer située au plan focal image du système optique et en amont d'un photodétecteur, la matrice de Bayer comprenant : un filtre optique de référence configuré pour éliminer ou atténuer dans le signal optique reçu une première bande de longueurs d'onde et pour laisser passer dans le signal optique reçu une deuxième bande de longueurs d'ondes, et par ailleurs huit filtres optiques adjacents au filtre optique de référence,
- un masque de phase agencé sur la pupille et configuré pour projeter au moins 98 % de l'énergie du signal optique transportée dans la première bande de longueurs d'onde et 98 % de l'énergie du signal optique transportée dans la deuxième bande de longueurs d'onde sélectivement sur le filtre optique de référence et sur au moins un filtre optique adjacent lequel est configuré pour laisser passer dans le signal optique reçu la première bande de longueurs.

D'autres aspects de l'invention sont définis dans les revendications dépendantes 2-14.

Un deuxième aspect de l'invention concerne un procédé d'acquisition d'image selon la revendication 15.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 est une vue schématique de profil de certains composants d'un capteur d'image selon un mode de réalisation de l'invention.
- Les figures 2 et 3 sont des vues partielles de face d'une matrice de Bayer.
- Les figures 4 et 5 sont respectivement une vue de profil et une vue de face d'un masque de phase selon un premier mode de réalisation de l'invention.
- La figure 6 représente deux courbes de déphasage d'un signal optique traversant le masque de phase selon le premier mode de réalisation de l'invention.
- La figure 7 représente la fonction d'étalement de point du masque de phase selon le premier mode de réalisation de l'invention.
- La figure 8 montre deux courbes d'étalement de point associées aux courbes de déphasages représentées en figure 6.
- La figure 9 est une vue partielle de face d'une matrice de Bayer, montrant également une répartition d'énergie projetée sur cette matrice de Bayer par le masque de phase selon le premier mode de réalisation de l'invention.
- Les figures 10 et 11 sont respectivement une vue en perspective et une vue de face d'un masque de phase selon un deuxième mode de réalisation de l'invention.
- La figure 12 est une vue partielle de face d'une matrice de Bayer, montrant également une répartition d'énergie projetée sur cette matrice de Bayer par le masque de phase selon le deuxième mode de réalisation de l'invention.
- Les figures 13 et 14 sont respectivement une vue de profil et une vue de face d'un masque de phase selon un troisième mode de réalisation de l'invention.
- La figure 15 est une vue de profil d'un masque de phase selon un quatrième mode de réalisation de l'invention.
- La figure 16 est une vue en perspective d'un masque de phase selon un cinquième mode de réalisation de l'invention.
- La figure 17 est une vue partielle de face d'une matrice de Bayer, montrant également une répartition d'énergie projetée sur cette matrice de Bayer par le masque de phase selon le cinquième mode de réalisation de l'invention.

Sur l'ensemble des figures, les éléments similaires portent des références identiques.

## DESCRIPTION DETAILLEE DE L'INVENTION

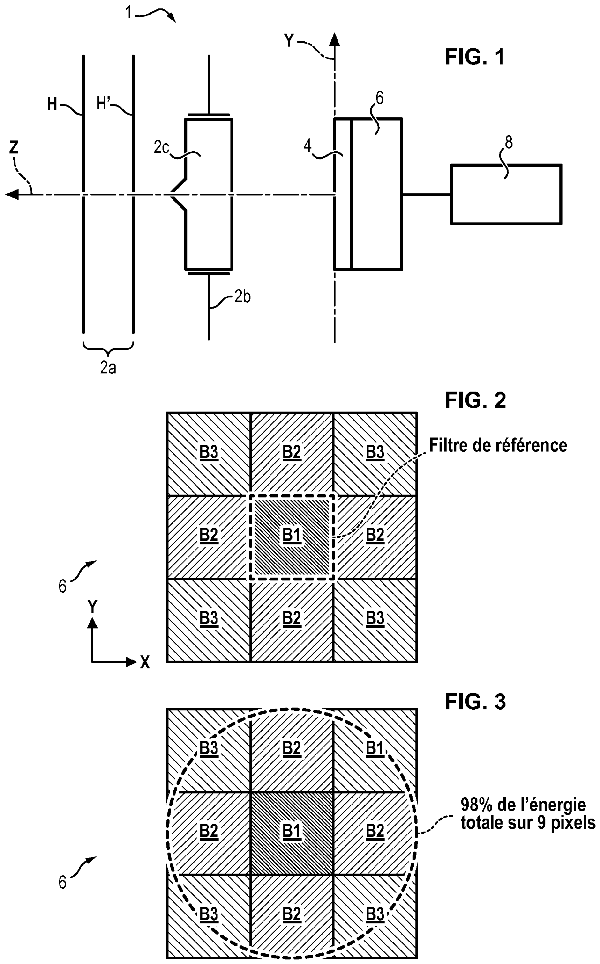

En référence à la **figure 1**, un capteur d'image 1 comprend un système optique 2a représenté ici par ses plans principaux H et H', une pupille du système optique 2b, un masque de phase 2c, une matrice de Bayer 4, un photodétecteur 6 et une unité de traitement d'image 8.

La matrice de Bayer 4 est conventionnelle. Elle comprend une pluralité de filtres optiques agencés sur une grille rectangulaire de dimensions N x M suivant un plan défini par deux axes : un axe X et un axe Y perpendiculaire à l'axe X (seul l'axe Y étant visible sur la figure 1).

Le photodétecteur 6 est agencé en aval de la matrice de Bayer 4.

Le photodétecteur 6, conventionnel, comprend typiquement une surface photosensible recouverte par la matrice de Bayer 4.

Le photodétecteur 6 est adapté pour générer, pour chaque filtre optique de la matrice de Bayer 4, un signal électrique à partir d'un signal optique ayant traversé le filtre optique.

L'unité de traitement d'image 8, également conventionnelle, est configurée pour appliquer aux différents signaux électriques générés par le photodétecteur 6 un traitement d'image connu en lui-même permettant de construire une image constituée de N x M pixels, chaque pixel correspondant à l'un des filtres optiques de la matrice de Bayer 4.

L'unité de traitement d'image 8 comprend par exemple au moins un processeur exécutant un programme de traitement d'image configuré à cet effet.

Le système optique 2a et le masque de phase 2c présentent un axe optique Z.

Le système optique 2a est agencé en amont de la matrice de Bayer 4, de sorte que la matrice de Bayer 4 soit au plan focal image du système optique 2a. Le plan focal image du système optique 2a est donc le plan (X, Y).

Le masque de phase 2c est positionné en amont de la matrice de Bayer 4 et de préférence agencé sur une pupille du système optique 2b.

La pupille 2b peut être indifféremment la pupille d'entrée, c'est-à-dire l'image du diaphragme d'ouverture à travers la partie du système optique 2a située en amont, ou bien la pupille de sortie, c'est-à-dire l'image du diaphragme d'ouverture à travers la partie du système optique située en aval, ou encore une pupille intermédiaire, c'est-à-dire l'image du diaphragme d'ouverture pour une partie seulement des éléments du système optique. L'homme du métier reconnaitra les définitions usuelles et saura que les pupilles d'entrée, de sortie et intermédiaires sont les conjuguées les unes des autres par les éléments du système optique qui les séparent.

Le masque de phase 2c est agencé de sorte à pouvoir transmettre le signal optique des différentes bandes de longueur d'onde. Dans la suite, on considérera une première bande comprenant la longueur d'onde $\lambda_1$ et une deuxième bande comprenant la longueur d'onde $\lambda_2$.

Le masque de phase 2c est conçu de façon à introduire dans la pupille un ensemble de différences de marche $\Phi_{DM}$, homogènes à des épaisseurs optiques, habituellement données en unités métriques « mètre ».

Le masque de phase 2c est conçu de façon à ce que l'ensemble de différences de marche $\Phi_{DM}$ vu par chaque bande de longueur d'onde correspondent à deux déphasages $\Delta_{\lambda 1}$ et $\Delta_{\lambda 2}$, habituellement mesurés en radians. Dans le cas particulier où $\lambda_1/\lambda_2 = 1/2$, il est évident pour l'homme du métier que $\Delta_{\lambda 2} = \Delta_{\lambda 1}/2$.

Il est à noter que chacun des déphasages peut s'implémenter modulo($2*\pi$), et donc s'écrire $\Delta_{\lambda \eta} = \Delta_{\lambda n}{}^{ref} + k*2*\pi$, avec k entier. Par défaut dans les modes de réalisation ci-après, k sera pris égal à 0 et $\Delta_{\lambda n} = \Delta_{\lambda n}{}^{ref}$.

En référence à la **figure 2**, la matrice de Bayer 4 comprend au moins les neuf filtres optiques suivants :

- un filtre optique de référence B1, configuré pour éliminer ou atténuer dans un signal optique reçu une première bande de longueurs d'onde, mais pour laisser passer une deuxième bande de longueurs d'onde,
- huit filtres optiques B2, B3 adjacents au filtre optique de référence B1.

Les neufs filtres B1, B2, B3 sont alignés de façon à former un damier 3 x 3, par exemple carré lorsque les filtres optiques sont eux-mêmes carrés.

Les huit filtres optiques adjacents B2, B3 comprennent quatre premiers filtres optiques adjacents B2 configurés pour laisser passer dans le signal optique reçu la première bande de longueurs d'onde, et pour éliminer ou atténuer la deuxième bande de longueurs d'onde. Les quatre premiers filtres adjacents B2 sont connexes au filtre B1 : ils sont agencés respectivement à gauche, à droite, au-dessus et en dessous du filtre B1.

Les huit filtres optiques adjacents B2, B3 comprennent par ailleurs quatre deuxièmes filtres optiques adjacents B3 configurés pour laisser passer dans le signal optique reçu la deuxième bande de longueurs d'onde, et pour éliminer ou atténuer la première bande de longueurs d'onde. Ils sont donc du même type que le filtre de référence B1. Les quatre deuxièmes filtres adjacents B2 sont agencés aux quatre coins du damier 3 x 3 formé par les neufs filtres B1, B2, B3.

Par exemple, la première bande est choisie dans la bande infrarouge « SWIR » (« Short-wavelength infrared ») et la deuxième bande choisie dans la bande infrarouge « MWIR » (« Mid-wavelength infrared »).

Le masque de phase 2c est configuré pour projeter au moins 98 % de l'énergie transportée par un signal optique dans la première bande de longueurs d'onde et 98 % de l'énergie transportée par un signal optique dans la seconde bande de longueurs d'onde sélectivement sur le filtre optique de référence B1 et sur au moins un des huit filtres optique adjacents B2 et B3. Par convention, on appelle dans la suite « énergie utile » les 98 % de cette énergie totale. La zone de la matrice de Bayer 4 dans laquelle cette énergie utile est projetée est inscrite dans le cercle dessiné en pointillés sur la **figure 3.**

L'image d'un point par un système optique n'étant pas un point mais une figure de diffraction qui, au mieux, est une tache d'Airy dont les dimensions sont imposées par la longueur d'onde du rayonnement, on considère habituellement sa taille définie au premier minimum de ce profil (en partant du centre de la tache, aussi appelé 1er anneau sombre). L'intégrale de l'énergie sur ce disque centré sur la tache correspond environ à 98% de l'énergie totale.

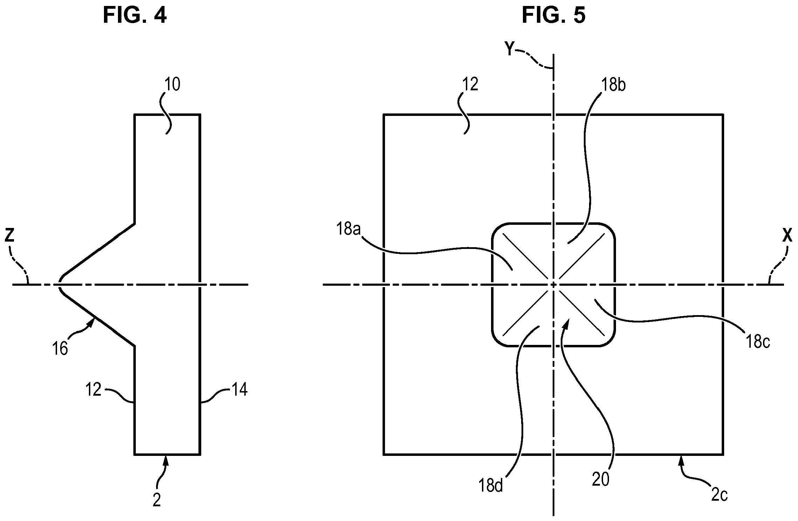

On a représenté en **figures 4 et 5** un premier mode de réalisation de masque de phase 2c permettant de mettre en œuvre une telle projection.

Le masque de phase 2c selon ce premier mode de réalisation se présente sous la forme d'une lame de phase 10 comprenant une surface amont 12 et une surface aval 14 opposée à la surface amont 12. Les deux surfaces 12, 14 sont orientées de façon que le signal optique pénètre dans la lame 10 par la surface amont 12, et en ressorte par la surface aval 14. La surface aval 14 est agencée en regard de la matrice de Bayer 4.

Les deux surfaces 12, 14 sont planes, et s'étendent dans des plans respectifs parallèles au plan (X, Y) de la matrice de Bayer 4.

Le masque de phase 2c comprend un bossage 16 faisant saillie depuis la surface amont 12 plane. Le bossage 16 présente quatre faces planes opposées deux à deux 18a-18d. Les faces 18a-18d sont reliées entre elles par des arrondis 20. Ces arrondis ont pour effet d'éviter des pics de diffraction incontrôlés.

En définitive, le bossage présente une forme globale de pyramide 18a-18d à quatre faces, dont les arêtes et l'apex seraient usinées pour former les arrondis 20.

Le bossage 16 présente une forme invariante par rotation de 90 degrés autour de l'axe Z normal à la surface plane amont 12.

Le bossage 16 n'est pas de révolution : il présente une première largeur mesurée parallèlement à l'axe X ou Y, et une deuxième largeur mesurée suivant un axe diagonal des axes X et Y et qui est plus grande que la première largeur.

Les dimensions du bossage sont adaptées de sorte que le masque de phase 2c déphase un signal optique

EP 3 685 573 B1

dans la première bande de longueurs d'ondes (comprenant $\lambda_1$) selon le déphasage d suivant, fonction des coordonnées d'incidence (x,y) de ce signal optique sur la surface amont du masque de phase 2c :

$$d = \Delta\lambda1(x,y)/\pi = max(1 - 0.80 * sin(x^2 + y^2) + 0.84 * cos(x^4 + y^4), 0)$$

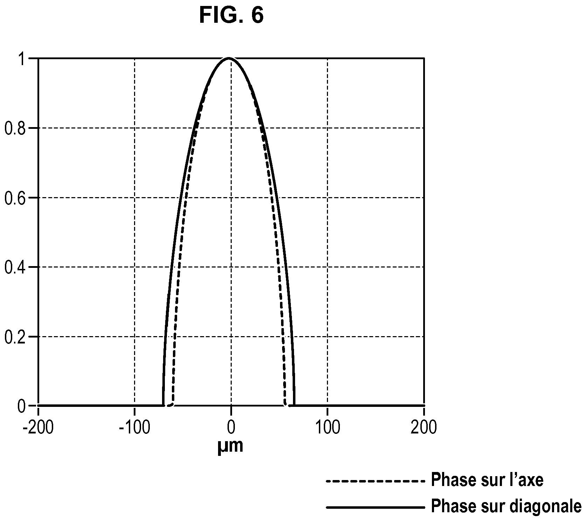

Comme l'illustre la **figure 6**, la courbe de déphasage dans le plan (X, Z) ou dans le plan (Y, Z) est différente de la courbe de déphasage induit par le masque de phase 2c dans un plan défini par l'axe Z mais tourné de 45° autour de l'axe Z par rapport au plan (X, Z).

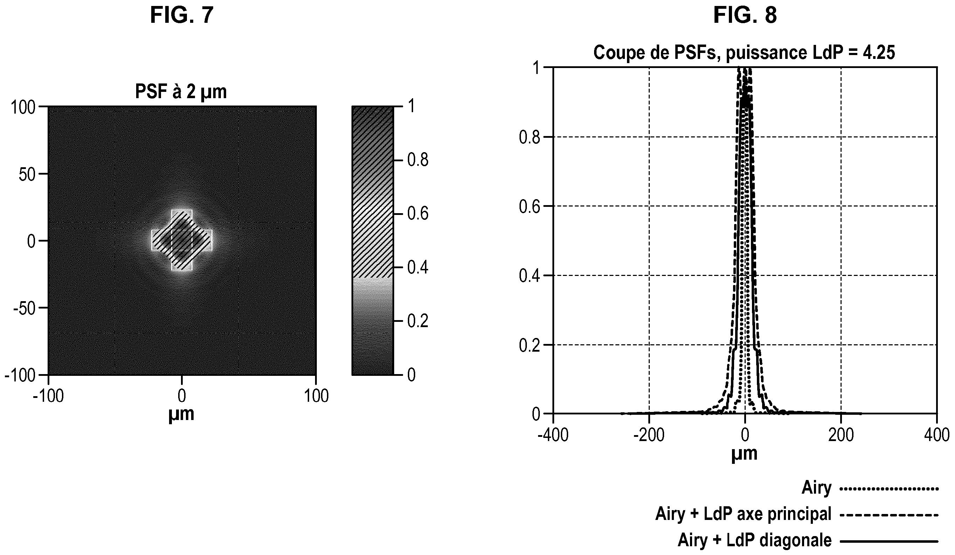

La fonction d'étalement de point (réponse impulsionnelle, en anglais PSF pour « Point Spread Function ») du masque de phase 2c pour le signal optique dans la première bande de longueur d'onde est représentée en **figures 7 et 8**. On remarque que cette fonction définit une croix dans un plan parallèle au plan (X, Y).

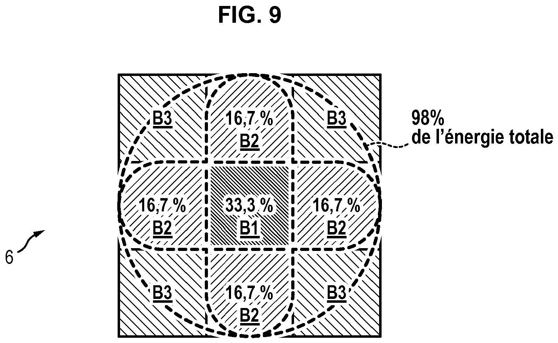

En conséquence, un signal optique ayant traversé le masque de phase 2c peut être projeté sélectivement sur une zone en croix formée couvrant sélectivement le filtre optique de référence B1 et les quatre premiers filtres optiques adjacents B2, comme cela est représenté en **figure 9**. Dans ce mode de réalisation, les quatre autres filtres optiques adjacents B3 ne reçoivent donc pas l'énergie utile (donc pas d'énergie transportée par le signal optique en la première bande de longueurs d'onde.

De préférence, le masque de phase 2c (notamment son bossage 16) présente une forme adaptée pour qu'au moins 50 % de l'énergie utile soit projetée sur le filtre optique de référence B1, ce qui correspond à au moins 49 % de l'énergie totale transportée par le signal optique dans la première bande de longueurs d'onde.

De préférence, le masque de phase 2c (notamment son bossage 16) présente une forme adaptée pour que chacun des quatre premiers filtres optiques B2 reçoive au moins 16,7 % de l'énergie utile (correspondant donc à au moins 16,3 % de l'énergie totale).

Le masque de phase est par exemple réalisé en ZnS, avec un indice optique $\eta_{\lambda1\text{-}\lambda2}{\sim}{=}2.265$ pour $\lambda_1 = 2.1\mu m$ et $\lambda_2 = 4.2\mu m.$

Soit R la distance entre le point considéré du masque de phase 2c et le centre de la pupille, c'est-à-dire la distance entre le point considéré du masque de phase 2c et à l'axe optique Z illustré sur la figure 1, et E l'épaisseur de la lame à phase entre ses deux surfaces 12 et 14, mesurée parallèlement à l'axe Z.

A titre d'exemple, lorsque la pupille a un rayon égal à 10 mm, l'épaisseur du masque de phase 2c est choisie de la manière suivante :

- Pour R ∈ [0mm ; 1.626mm] : E+2.493$\mu$m

  ◦ $\Phi_{DM}$=2.493*(2.265-1)=3.15$\mu$m
  ◦ $\Delta_{\lambda_1}/\pi$=3=1 et $\Delta_{\lambda_2}/\pi$=1.5

- Pour R ∈[1.626mm ; 6.335mm] : E

  ◦ $\Phi_{DM}$=0$\mu$m
  ◦ $\Delta_{\lambda_1}/\pi$=0 et $\Delta_{\lambda_2}/\pi$=0

- Pour R ∈[6.335mm ; 10mm] : E+0.831$\mu$m

  ◦ $\Phi_{DM}$=0.831*(2.265-1)=1.04$\mu$m
  ◦ $\Delta_{\lambda_1}/\pi$=1 et $\Delta_{\lambda_2}/\pi$=0.5

Le fonctionnement du capteur d'image 1 est le suivant.

Un signal optique est reçu par le capteur d'image 1. Ce signal optique pénètre dans le masque de phase 2c par sa surface amont 12 et notamment son bossage 16. Le signal optique traverse la lame 10 et en ressort par la surface aval 14. Au cours de cette traversée, le signal optique subit un déphasage. Le signal optique est ensuite projeté sur la matrice de Bayer 4, sélectivement sur le filtre optique de référence B1 et les quatre premiers filtres optiques adjacents B2.

Le filtre optique de référence B1 atténue ou élimine, dans le signal optique qu'il reçoit, la première bande de longueurs d'ondes comprenant $\lambda_1$, mais laisse passer la deuxième bande de longueurs d'onde comprenant $\lambda_2$. Le signal optique ainsi filtré est détecté par le photodétecteur 6, converti en un signal électrique, puis transmis à l'unité de traitement d'image 8.

Par ailleurs, chacun des premiers filtres optiques B2 atténue ou élimine, dans le signal optique qu'il reçoit, la deuxième bande de longueurs d'ondes comprenant $\lambda_2$, mais laisse passer la première bande de longueur d'onde

comprenant $\lambda_1$. Le signal optique ainsi filtré est détecté par le photodétecteur 6, converti en un signal électrique, puis transmis à l'unité de traitement d'image 8.

Les cinq signaux électriques générés par le photodétecteur 6 sont combinés selon une méthode connue en elle-même par l'unité de traitement d'image pour produire une couleur associée à un pixel d'une image.

Dans ce qui précède, il a été supposé que la matrice de Bayer ne comprend que 9 filtres optiques disposés en damier 3 x 3. Bien entendu, la matrice de Bayer peut comprendre bien davantage de filtres optiques. Le capteur d'image comprend alors non pas un seul masque 2, mais autant de masques 2 qu'il existe de filtres optiques comprenant 8 voisins dans la matrice de Bayer 4, et par conséquent susceptibles d'être considérés comme des filtres optiques de référence B1.

Les étapes qui précèdent sont ainsi mises en œuvre pour chaque filtre optique susceptible d'être considéré comme un filtre optique de référence, de sorte obtenir en sortie de l'unité de traitement d'image 8, une pluralité de couleurs de pixels, les pixels formant une image complète.

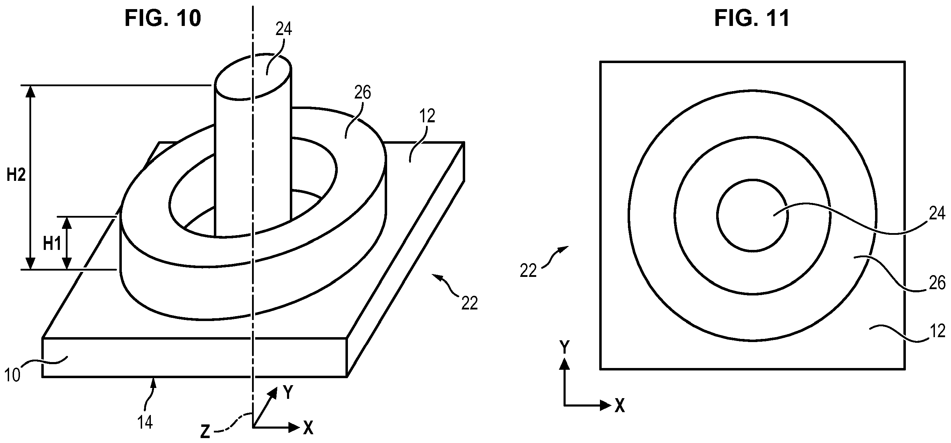

On a représenté en **figures 10 et 11** un deuxième mode de réalisation de masque de phase 22 permettant de mettre en œuvre une projection de 98 % de l'énergie d'un signal optique transportée dans la première bande de longueurs d'onde sélectivement sur le filtre optique de référence B1 et sur au moins un filtre optique adjacent. Ce masque de phase 22 peut remplacer le masque de phase 2c dans le capteur représenté sur la figure 1.

Le masque de phase 22 diffère du masque de phase 2c selon le premier mode de réalisation par le fait qu'il comprend deux bossages 24, 26 faisant chacun saillie depuis la surface plane amont 12, et non un seul : un bossage central 24 et un bossage périphérique 26.

Le bossage central 24 présente une forme cylindrique de révolution autour de l'axe Z. Le bossage central 24 présente un sommet plan et parallèle à la surface amont 12. Le bossage central présente une hauteur mesurée parallèlement à l'axe Z entre la surface amont et son sommet égale à une valeur H1.

Le bossage périphérique 26 présente une forme annulaire ou de couronne, de révolution autour de l'axe Z. Ce bossage périphérique 26 se trouve autour et à distance du bossage central 24. Le bossage périphérique 26 présent un sommet plan et parallèle à la surface amont 22. Le bossage périphérique 26 présente une hauteur mesurée parallèlement à l'axe Z entre la surface amont et son sommet égale à une valeur H2 inférieure à H1.

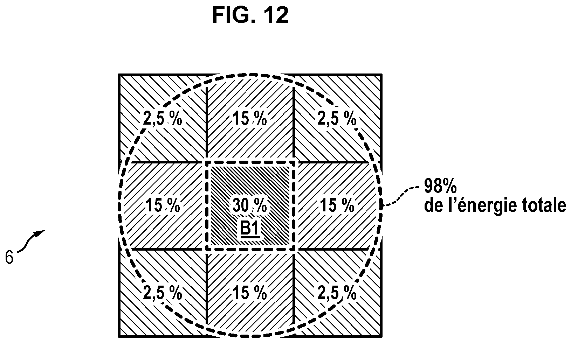

Le masque de phase 22 selon ce deuxième mode de réalisation est adapté pour projeter l'énergie utile dans tout le cercle dont le périmètre est dessiné en pointillés sur la **figure 12.** Autrement dit, contrairement au masque de phase 2c selon le premier mode de réalisation, de l'énergie est reçue par les neuf filtres optiques B1, B2, B3 lorsque le masque de phase 22 est utilisé.

De préférence, la forme des bossages 24, 26 est ajustée de sorte que le masque de phase 22 projette au moins un tiers de l'énergie utile sur le filtre optique de référence B1 (donc au moins 29 % de l'énergie totale transportée par le signal optique dans la première bande de longueurs d'onde).

De préférence, la forme des bossages 24, 26 est ajustée de sorte que le masque de phase 22 projette au moins 60 % de l'énergie utile sur les quatre filtres optiques adjacents (ce qui représente environ 58 % de l'énergie totale). Par exemple, l'axe Z passe par le centre du filtre de référence, afin que chacun des quatre filtres optiques adjacents reçoive 15 % de l'énergie utile. Les quatre autres filtres optiques adjacents reçoivent chacun dans ce cas 2,5 % de l'énergie utile.

Le masque de phase 22 selon le deuxième mode de réalisation présente l'avantage d'être plus simple à fabriquer que le masque 2 selon le premier mode de réalisation.

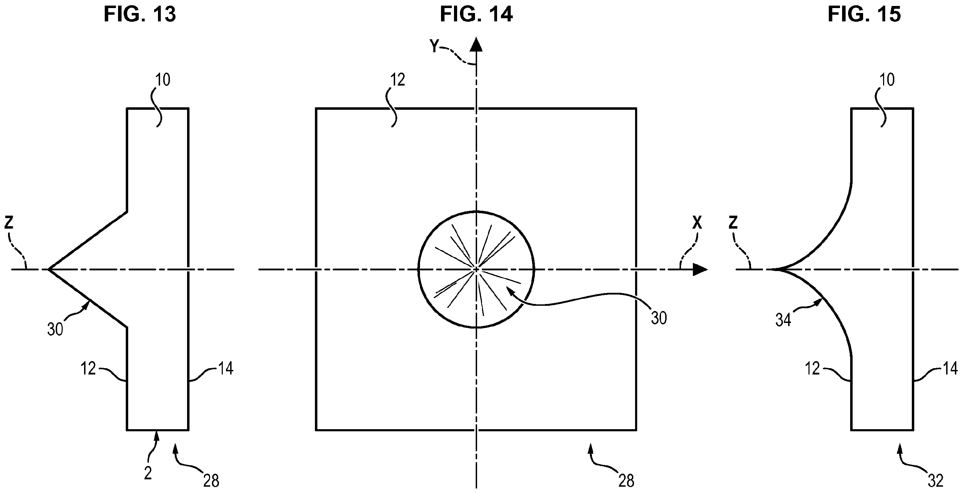

On a représenté en **figures 13 et 14** un troisième mode de réalisation de masque de phase 28 permettant de mettre en œuvre une projection de 98 % de l'énergie d'un signal optique transportée dans la première bande de longueurs d'onde sélectivement sur le filtre optique de référence B1 et les huit filtres optiques adjacents B2, B3, tout comme le masque 22 selon le deuxième mode de réalisation.

Comme le masque 2 selon le premier mode de réalisation, ce masque de phase 28 comprend un unique bossage 30 faisant saillie depuis la surface plane amont 12. Ce bossage 30 présente toutefois une forme conique de révolution autour de l'axe Z. Le profil de ce bossage est triangulaire dans un plan perpendiculaire à la surface amont, comme montré en figure 12.

On a représenté en **figure 15** un quatrième mode de réalisation de masque de phase 2c permettant de mettre en œuvre une projection de 98 % de l'énergie d'un signal optique transportée dans la première bande de longueurs d'onde sélectivement sur le filtre optique de référence B1 et les huit filtres optiques adjacents B2, B3, tout comme les masques 22 et 28 selon le deuxième et le troisième mode de réalisation.

Comme le masque selon le premier mode de réalisation, ce masque de phase 2c comprend un unique bossage 34 faisant chacun saillie depuis la surface plane amont. Ce bossage 34 présente toutefois une forme effilée concave. Le profil de ce bossage dans un plan perpendiculaire à la surface amont n'est pas triangulaire mais courbe, comme montré en figure 14.

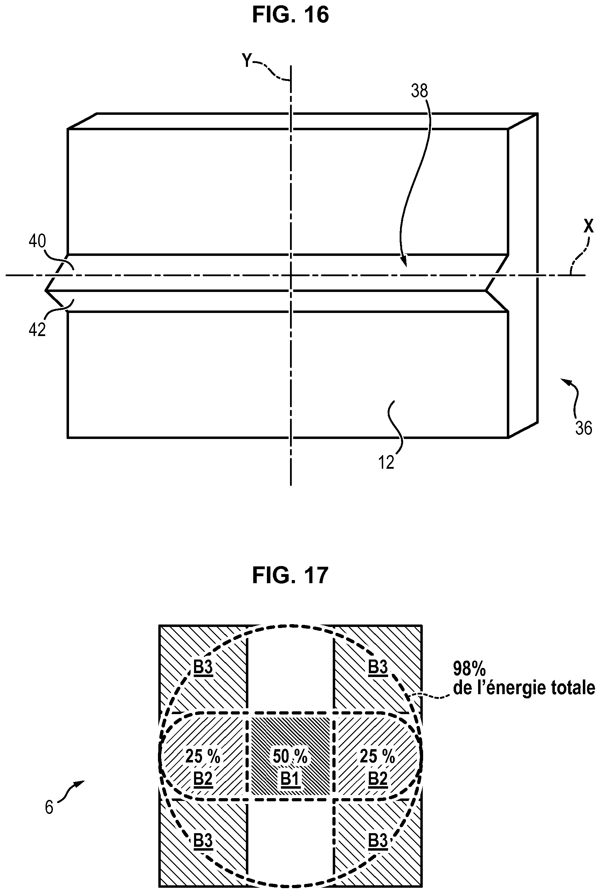

On a représenté en **figure 16** un cinquième mode de réalisation de masque de phase 36 permettant de mettre en œuvre la projection attendue de l'énergie utile.

Le masque de phase 36 présente un profil identique à celui du masque 2c représenté en figure 5. Le masque 36 présente en effet un bossage 38 à profil généralement triangulaire faisant saillie depuis la surface amont 12. Néanmoins, le bossage 38 présente une forme générale de prisme triangulaire et non pyramidale.

Ce prisme triangulaire est défini par une génératrice parallèle à l'une des deux axes X ou Y de la matrice de Bayer.

Le bossage comprend deux faces libres 40, 42 rectangulaires reliées par une arête se trouvant à distance de la surface amont 12 (ces deux faces libres correspondant à deux des trois faces du prisme, la dernière face étant dans le plan de la surface amont 12).

De préférence, les deux faces libres 40, 42 ne sont pas reliés par une arête mais par un arrondi, et/ ou chacune des deux faces libres 40, 42 est reliés à la surface plane 12 par un arrondi. Ces arrondis ont pour effet d'éviter des pics de diffraction incontrôlés.

Lorsque le masque de phase 36 est utilisé dans le capteur d'image 1 représenté en figure 1, ce masque 36 projette un signal optique incident sur seulement le filtre optique de référence B1 et deux premiers filtres optiques adjacents B2 qui sont connexes au filtre de préférence B1. Ces trois filtres sont alignés parallèlement à l'un des deux axes X ou Y.

De préférence, le masque de phase 36 est adapté pour au moins 50 % de l'énergie utile sur le filtre optique de référence B1 (donc au moins 49 % de l'énergie totale transportée par le signal optique dans la première bande de longueurs d'onde). Les deux filtres optiques B2 immédiatement à gauche et à droite (ou respectivement en haut et en bas) du filtre B1 reçoivent chacun au moins 25 % de l'énergie utile, comme illustré en **figure 17**.

## Revendications

1. Capteur d'image comprenant :

   • un système optique (2a) pour recevoir un signal optique, le système optique comprenant une pupille (2b),
   • une matrice de Bayer (4) située au plan focal image du système optique (2a) et en amont d'un photodétecteur (6), la matrice de Bayer (1) comprenant : un filtre optique de référence (B1) configuré pour éliminer ou atténuer dans le signal optique reçu une première bande de longueurs d'onde et pour laisser passer dans le signal optique reçu une deuxième bande de longueurs d'ondes, et par ailleurs huit filtres optiques (B2, B3) adjacents au filtre optique de référence (B1),
   le capteur d'image étant **caractérisé en ce qu'**il comprend en outre
   • un masque de phase (2c, 22, 28) agencé sur la pupille (2b) et configuré pour projeter au moins 98 % de l'énergie du signal optique transportée dans la première bande de longueurs d'onde et 98 % de l'énergie du signal optique transportée dans la deuxième bande de longueurs d'onde sélectivement sur le filtre optique de référence (B1) et sur au moins un filtre optique adjacent (B2) lequel est configuré pour laisser passer dans le signal optique reçu la première bande de longueurs d'onde.

2. Capteur d'image selon la revendication 1, dans lequel le masque de phase est configuré pour projeter au moins 98 % de chacune desdites énergies sélectivement sur le filtre optique de référence (B1) et deux des filtres optiques adjacents, et dans lequel chacun des deux filtres optiques adjacents est configuré pour laisser passer dans le signal optique reçu la première bande de longueurs d'onde et pour éliminer ou atténuer dans le signal optique reçu la deuxième bande de longueurs d'onde.

3. Capteur d'image selon la revendication 2, dans lequel au moins 49 % de chacune desdites énergies est projetée sur le filtre optique de référence (B1) et dans lequel au plus 24,5 % de chacune desdites énergies est de préférence projetée sur chacun des deux filtres optiques adjacents.

4. Capteur d'image selon l'une des revendications 1 à 3, dans lequel le masque de phase (2c) présente une surface plane et comprend un bossage (38) en forme de prisme triangulaire faisant saillie depuis la surface plane, le bossage comprenant de préférence deux faces libres reliées par un arrondi.

5. Capteur d'image selon la revendication 1, dans lequel le masque de phase (2c) est configuré pour projeter au moins 98 % de chacune desdites énergies sélectivement sur le filtre optique de référence (B1) et quatre (B2) des filtres optiques adjacents, et dans lequel chacun des quatre filtres optiques adjacents (B2) est configuré pour laisser passer dans le signal optique reçu la première bande de longueurs d'onde.

6. Capteur d'image selon la revendication 5, dans lequel le masque de phase (2c) est configuré pour projeter au moins 32 % de chacune desdites énergies sur le filtre optique de référence (B1).

**7.** Capteur d'image selon l'une des revendications 5 à 6, dans lequel le masque de phase présente une surface plane et comprend par ailleurs un bossage faisant saillie depuis la surface plane, dans lequel le bossage présente quatre faces planes opposées deux à deux et de préférence reliées par des arrondis.

**8.** Capteur d'image selon la revendication 7, dans lequel le bossage présente une forme invariante par rotation de 90 degrés autour d'un axe normal à la surface plane.

**9.** Capteur d'image selon la revendication 1, dans lequel le masque de phase est configuré pour projeter au moins 98 % de chacune desdites énergies sélectivement sur le filtre optique de référence (B1) et les huit filtres optiques adjacents.

**10.** Capteur d'image selon la revendication 9, dans lequel le masque de phase est configuré pour projeter au moins 29 % de chacune desdites énergies sur le filtre optique de référence (B1).

**11.** Capteur d'image selon l'une des revendications 9 à 10, dans lequel dans lequel le masque de phase est configuré pour projeter au moins 58 % de chacune desdites énergies sur quatre des filtres optiques adjacents, et dans lequel chacun des quatre filtres optiques adjacents est configuré pour éliminer ou atténuer dans le signal optique reçu une deuxième bande de longueurs d'onde différente de la première bande.

**12.** Capteur d'image selon l'une des revendications 9 à 11, dans lequel le masque de phase présente une surface plane et comprend un bossage central faisant saillie depuis la surface plane sur une première hauteur, ainsi qu'un bossage annulaire faisant également saillie depuis la surface plane sur une deuxième hauteur inférieure à la première hauteur, le bossage annulaire s'étendant autour de et à distance du bossage central.

**13.** Capteur d'image selon l'une des revendications 9 à 11, dans lequel le masque de phase présente une surface plane et comprend un bossage faisant saillie depuis la surface plane, dans lequel le bossage est conique ou présente une forme effilée concave.

**14.** Capteur d'image selon l'une des revendications 12 à 13, dans lequel chaque bossage est de révolution autour d'un axe normal à la surface plane.

**15.** Procédé d'acquisition d'image par un capteur d'image comprenant un système optique (2a) pour recevoir un signal optique, une matrice de Bayer (4) située au plan focal image du système optique et en amont d'un photodétecteur (6), la matrice de Bayer (4) comprenant un filtre optique de référence (B1) configuré pour éliminer ou atténuer dans le signal optique reçu une première bande de longueurs d'onde et pour laisser passer dans le signal reçu une deuxième bande de longueurs d'onde, et huit filtres optiques (B2, B3) adjacents au filtre optique de référence (B1), le procédé étant **caractérisé par** une projection, par un masque de phase (2c, 22, 28) agencé sur une pupille (2b) du système optique (2a), d'au moins 98 % de l'énergie du signal optique transportée dans la première bande de longueurs d'onde et 98 % de l'énergie du signal optique transportée dans la seconde bande de longueurs d'onde sélectivement sur le filtre optique de référence (B1) et sur au moins un des huit filtres optiques adjacents (B2, B3) configuré pour laisser passer dans le signal optique reçu la première bande de longueurs d'onde.

**Patentansprüche**

**1.** Bildsensor, umfassend:

- ein optisches System (2a) zum Empfangen eines optischen Signals, wobei das optische System (2a) eine Blende (2b) umfasst,
- eine Bayer-Matrix (4), die sich in der Bildbrennebene des optischen Systems (2a) und vor einem Photodetektor (6) befindet, wobei die Bayer-Matrix (1) Folgendes umfasst: einen optischen Referenzfilter (B1), der konfiguriert ist, um in dem empfangenen optischen Signal ein erstes Wellenlängenband zu eliminieren oder abzuschwächen und um in dem empfangenen optischen Signal ein zweites Wellenlängenband passieren zu lassen, und zudem acht an den optischen Referenzfilter (B1) angrenzende optische Filter (B2, B3), wobei der Bildsensor **dadurch gekennzeichnet ist, dass** er ferner Folgendes umfasst:

- eine Phasenmaske (2c, 22, 28), die auf der Blende (2b) angebracht ist und konfiguriert ist, um mindestens 98 % der im ersten Wellenlängenband transportierten optischen Signalenergie und 98 % der im zweiten Wellenlängenband transportierten optischen Signalenergie selektiv auf den optischen Referenzfilter (B1) und mindestens einen angrenzenden optischen Filter (B2) zu projizieren, der konfiguriert ist, um in dem empfangenen optischen Signal das erste Wellenlängenband passieren zu lassen.

**2.** Bildsensor nach Anspruch 1, wobei die Phasenmaske konfiguriert ist, um mindestens 98 % von jeder der Energien selektiv auf den optischen Referenzfilter (B1) und zwei der angrenzenden optischen Filter zu projizieren und wobei jeder der beiden angrenzenden optischen Filter konfiguriert ist, um in dem empfangenen optischen Signal das erste Wellenlängenband passieren zu lassen und in dem empfangenen optischen Signal das zweite Wellenlängenband zu eliminieren oder abzuschwächen.

**3.** Bildsensor nach Anspruch 2, wobei mindestens 49 % von jeder der Energien auf den optischen Referenzfilter (B1) projiziert wird und wobei höchstens 24,5 % von jeder der Energien vorzugsweise auf jeden der beiden angrenzenden optischen Filter projiziert wird.

**4.** Bildsensor nach einem der Ansprüche 1 bis 3, wobei die Phasenmaske (2c) eine ebene Fläche aufweist und einen Vorsprung (38) in Form eines von der ebenen Fläche abstehenden Dreiecksprismas umfasst, wobei der Vorsprung vorzugsweise zwei freie Flächen aufweist, die durch eine Rundung verbunden sind.

**5.** Bildsensor nach Anspruch 1, wobei die Phasenmaske (2c) konfiguriert ist, um mindestens 98 % von jeder der Energien selektiv auf den optischen Referenzfilter (B1) und vier (B2) der angrenzenden optischen Filter zu projizieren, und wobei jeder der vier angrenzenden optischen Filter (B2) konfiguriert ist, um in dem empfangenen optischen Signal das erste Wellenlängenband passieren zu lassen.

**6.** Bildsensor nach Anspruch 5, wobei die Phasenmaske (2c) konfiguriert ist, um mindestens 32 % von jeder der Energien auf den optischen Referenzfilter (B1) zu projizieren.

**7.** Bildsensor nach einem der Ansprüche 5 bis 6, wobei die Phasenmaske eine ebene Fläche aufweist und ferner einen von der ebenen Fläche abstehenden Vorsprung umfasst, wobei der Vorsprung vier ebene Flächen aufweist, die sich paarweise gegenüber liegen und vorzugsweise durch Rundungen verbunden sind.

**8.** Bildsensor nach Anspruch 7, wobei der Vorsprung eine Form aufweist, die bei einer Drehung um 90 Grad um eine Achse senkrecht zur ebenen Fläche invariant ist.

**9.** Bildsensor nach Anspruch 1, wobei die Phasenmaske konfiguriert ist, um mindestens 98 % von jeder der Energien selektiv auf den optischen Referenzfilter (B1) und die acht angrenzenden optischen Filter zu projizieren.

**10.** Bildsensor nach Anspruch 9, wobei die Phasenmaske konfiguriert ist, um mindestens 29 % von jeder der Energien auf den optischen Referenzfilter (B1) zu projizieren.

**11.** Bildsensor nach einem der Ansprüche 9 bis 10, wobei die Phasenmaske konfiguriert ist, um mindestens 58 % von jeder der Energien auf vier der angrenzenden Filter zu projizieren, und wobei jeder der vier angrenzenden optischen Filter konfiguriert ist, um im empfangenen optischen Signal ein zweites Wellenlängenband, das sich vom ersten Band unterscheidet, zu eliminieren oder abzuschwächen.

**12.** Bildsensor nach einem der Ansprüche 9 bis 11, wobei die Phasenmaske eine ebene Fläche aufweist und einen zentralen Vorsprung umfasst, der von der flachen Oberfläche bis zu einer ersten Höhe absteht, sowie einen ringförmigen Vorsprung, der ebenfalls von der ebenen Fläche bis zu einer zweiten Höhe absteht, die niedriger als die erste Höhe ist, wobei sich der ringförmige Vorsprung um den zentralen Vorsprung herum und im Abstand von diesem erstreckt.

**13.** Bildsensor nach einem der Ansprüche 9 bis 11, wobei die Phasenmaske eine ebene Fläche aufweist und einen Vorsprung umfasst, der von der ebenen Oberfläche absteht, wobei der Vorsprung konisch ist oder eine konkave, sich verjüngende Form aufweist.

**14.** Bildsensor nach einem der Ansprüche 12 bis 13, bei dem jeder Vorsprung um eine Achse senkrecht zur ebenen Fläche drehbar ist.

**15.** Verfahren zur Bilderfassung durch einen Bildsensor, umfassend ein optisches System (2a) zum Empfangen eines optischen Signals, eine Bayer-Matrix (4), die sich in der Bildbrennebene des optischen Systems (2a) und vor einem Photodetektor (6) befindet, wobei die Bayer-Matrix (4) einen optischen Referenzfilter (B1), der konfiguriert ist, um in dem empfangenen optischen Signal ein erstes Wellenlängenband zu eliminieren oder abzuschwächen und in dem empfangenen Signal ein zweites Wellenlängenband passieren zu lassen, und acht an den optischen Referenzfilter (B1) angrenzende optische Filter (B2, B3) umfasst, wobei das Verfahren **gekennzeichnet ist durch** das Projizieren mittels einer Phasenmaske (2c, 22, 28), die auf einer Blende (2b) des optischen Systems (2a) angebracht ist, von mindestens 98 % der in dem ersten Wellenlängenband transportierten optischen Signalenergie und 98 % der in dem zweiten Wellenlängenband transportierten optischen Signalenergie, selektiv auf den optischen Referenzfilter (B1) und auf mindestens einen der acht angrenzenden optischen Filter (B2, B3), die konfiguriert sind, um in dem empfangenen optischen Signal das erste Wellenlängenband passieren zu lassen.

**Claims**

**1.** Image sensor comprising:

• an optical system (2a) for receiving an optical signal, the optical system comprising a pupil (2b),
• a Bayer matrix (4) located on the image focal plane of the optical system (2a) and upstream from a photodetector (6), the Bayer matrix (1) comprising: a reference optical filter (B1) configured to eliminate or attenuate in the received optical signal a first band of wavelengths and to allow through in the received optical signal a second band of wavelengths, and moreover eight optical filters (B2, B3) adjacent to the reference optical filter (B1), the image sensor being **characterised in that** it further comprises
• a phase mask (2c, 22, 28) arranged on the pupil (2b) and configured to project at least 98% of the energy of the optical signal carried in the first band of wavelengths and 98% of the energy of the optical signal carried in the second band of wavelengths selectively on the reference optical filter (B1) and on at least one adjacent optical filter (B2) which is configured to allow through in the received optical signal the first band of wavelengths.

**2.** Image sensor according to claim 1, wherein the phase mask is configured to project at least 98% of each one of said energies selectively on the reference optical filter (B1) and two of the adjacent optical filters, and wherein each one of the two adjacent optical filters is configured to allow through in the received optical signal the first band of wavelengths and to eliminate or attenuate in the received optical signal the second band of wavelengths.

**3.** Image sensor according to claim 2, wherein at least 49% of each one of said energies is projected on the reference optical filter (B1) and wherein at most 24.5% of each one of said energies is preferably projected on each one of the two adjacent optical filters.

**4.** Image sensor according to one of claims 1 to 3, wherein the phase mask (2c) has a flat surface and comprises a boss (38) in the shape of a triangular prism protruding from the flat surface, the boss preferably comprising two free faces connected by a curve.

**5.** Image sensor according to claim 1, wherein the phase mask (2c) is configured to project at least 98% of each one of said energies selectively on the reference optical filter (B1) and four (B2) of the adjacent optical filters, and wherein each one of the four adjacent optical filters (B2) is configured to allow through in the received optical signal the first band of wavelengths.

**6.** Image sensor according to claim 5, wherein the phase mask (2c) is configured to project at least 32% of each one of said energies on the reference optical filter (B1).

**7.** Image sensor according to one of claims 5 to 6, wherein the phase mask has a flat surface and moreover comprises a boss protruding from the flat surface, wherein the boss has four flat faces opposite two by two and preferably connected by curves.

**8.** Image sensor according to claim 7, wherein the boss has an invariant shape by rotation of 90 degrees about an axis normal to the flat surface.

**9.** Image sensor according to claim 1, wherein the phase mask is configured to project at least 98% of each one of said energies selectively on the reference optical filter (B1) and the eight adjacent optical filters.

10. Image sensor according to claim 9, wherein the phase mask is configured to project at least 29% of each one of said energies on the reference optical filter (B1).

11. Image sensor according to one of claims 9 to 10, wherein the phase mask is configured to project at least 58% of each one of said energies on four of the adjacent optical filters, and wherein each one of the four adjacent optical filters is configured to eliminate or attenuate in the received optical signal a second band of wavelengths different from the first band.

12. Image sensor according to one of claims 9 to 11, wherein the phase mask has a flat surface and comprises a central boss protruding from the flat surface over a first height, as well as an annular boss also protruding from the flat surface over a second height less than the first height, the annular boss extending around and at a distance from the central boss.

13. Image sensor according to one of claims 9 to 11, wherein the phase mask has a flat surface and comprises a boss protruding from the flat surface, wherein the boss is conical or has a concave tapered shape.

14. Image sensor according to one of claims 12 to 13, wherein each boss is of revolution about an axis normal to the flat surface.

15. Method for acquiring an image by an image sensor comprising an optical system (2a) for receiving an optical signal, a Bayer matrix (4) located on the image focal plane of the optical system and upstream from a photodetector (6), the Bayer matrix (4) comprising a reference optical filter (B1) configured to eliminate or attenuate in the received optical signal a first band of wavelengths and to allow through in the signal received a second band of wavelengths, and eight optical filters (B2, B3) adjacent to the reference optical filter (B1), the method being **characterised by** a projection, by a phase mask (2c, 22, 28) arranged on a pupil (2b) of the optical system (2a), of at least 98% of the energy of the optical signal carried in the first band of wavelengths and 98% of the energy of the optical signal carried in the second band of wavelengths selectively on the reference optical filter (B1) and on at least one of the eight adjacent optical filters (B2, B3) configured to allow through in the received optical signal the first band of wavelengths.

FIG. 1

FIG. 2

Filtre de référence

FIG. 3

98% de l'énergie totale sur 9 pixels

EP 3 685 573 B1

**FIG. 4**

**FIG. 5**

## FIG. 6

Phase sur l'axe
Phase sur diagonale

## FIG. 7

PSF à 2 µm

## FIG. 8

Coupe de PSFs, puissance LdP = 4.25

Airy ·················
Airy + LdP axe principal ------------
Airy + LdP diagonale ————

EP 3 685 573 B1

# FIG. 9

**FIG. 10**

**FIG. 11**

EP 3 685 573 B1

## FIG. 12

98%
de l'énergie totale

**FIG. 13**

**FIG. 14**

**FIG. 15**

EP 3 685 573 B1

## FIG. 16

## FIG. 17

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010200730 A1
- US 2007252908 A